# EUROPÄISCHE PATENTSCHRIFT

(11) **EP 2 851 113 B1**
(45) Veröffentlichungstag und Bekanntmachung des Hinweises auf die Patenterteilung: **28.08.2019**
(21) Anmeldenummer: 14183476.2
(22) Anmeldetag: 04.09.2014
(51) Int. Cl.: B01D 46/00, D01H 5/66

(54) **Verfahren zum Reinigen eines Filters an einer Strecke und Strecke mit einem Absaugsystem**
Method for cleaning a filter in a line and line comprising a suction system
Procédé de nettoyage d'un filtre dans une ligne de production et ligne de production dotée d'un système d'aspiration

(30) Priorität: 18.09.2013 DE 102013110269
(43) Veröffentlichungstag der Anmeldung: 25.03.2015
(73) Patentinhaber: Rieter Ingolstadt GmbH, 85055 Ingolstadt (DE)
(72) Erfinder: Göhler, Holm, 85051 Ingolstadt (DE); Schmolke, Daniel, 85049 Ingolstadt (DE)
(74) Vertreter: Bergmeier, Werner

(56) Entgegenhaltungen:
- WO-A1-2004/100752
- DE-A1- 3 629 559
- DE-A1- 3 900 543
- DE-A1- 10 250 293
- DE-A1-102009 028 359
- DE-C2- 3 891 430
- DE-U1- 29 505 007

## Beschreibung

Die vorliegende Erfindung betrifft ein Verfahren zum Reinigen eines Filters an einer Strecke sowie eine Strecke zum Verstrecken eines oder mehrerer Faserbänder mit einer Steuereinrichtung zum Steuern von Arbeitsprozessen der Strecke und mit einem Absaugsystem zum Absaugen von bei Arbeitsprozessen freigesetzten Staub- und/oder Schmutzpartikeln, wobei das Absaugsystem einen Absaugventilator zum Erzeugen eines Saugstroms und einen Filter zum Ausfiltern von Staub- und/oder Schmutzpartikeln aus dem Saugstrom aufweist.

Eine derartige Strecke ist aus der DE 10 2009 028 359 A1 bekannt. Bei der vorbekannten Strecke wird eine Verschmutzung des Filters durch eine Messung des Druckabfalls des Saugstroms am Filter erkannt. Übersteigt der Druckabfall einen festgelegten Wert, so wird die sich bildende Schmutzmatte mittels eines Wischers mechanisch entfernt.

Die WO 2004/100752 A1 offenbart eine Reinigungsvorrichtung eines gattungsfremden Staubsaugers. Die Reinigungseinrichtung weist vorzugsweise einen Drucklufterzeuger zum Abblasen der Teilchen von der anströmseitigen Oberfläche eines Keramikfilters auf. In einem Ausführungsbeispiel wird eine Strahldüse auf die anströmseitige Oberfläche des Keramikfilters gerichtet. Die Strahldüse wird über eine Luftdruckleitung mit Überdruck versorgt. Durch die Verwendung des Drucklufterzeugers können die Teilchen von der Oberfläche des Keramikfilters in einfacher Weise abgeblasen werden. Der Überdruck kann von einem Luftverdichter erzeugt sein, der mittels eines elektrischen Motors antreibbar ist. Der elektrische Motor ist an eine eigene Energiequelle oder an die gleiche elektrische Energiequelle anschließbar, wie der Motor des Motor-/Gebläseaggregats. Die Energiequelle kann auch eine netzunabhängige Energieversorgung sein, wie z. B. eine Batterie oder ein Akkumulator. Eine Steuerung des Drucklufterzeugers ist nicht offenbart. Aus der DE 102 50 293 A1 ist eine Reinigungsvorrichtung bekannt, bei welcher zwei Filter vorgesehen sind. Die beiden Filter sind wechselweise im Einsatz, um jeweils den anderen Filter reinigen zu können. Die Reinigung erfolgt beispielsweise mittels in Abhängigkeit eines Unterdruck-Sollwertes.

Aus der DE 36 29 559 A1 ist eine Entstaubungsvorrichtung für Textilmaschinen mit einem Filterelement, das einen staubbeladene Luft führenden Raum von einem Reinluftraum trennt, bekannt, bei welcher das Filterelement mit einer Druckluft beaufschlagbaren längs zur Filterelementfläche orientierte Blasdüse zum Lösen angesetzter Staubansammlungen besitzt.

Aufgabe der vorliegenden Erfindung ist es, eine Strecke dahingehend zu verbessern, dass der Filter besonders effektiv gereinigt werden kann.

Die Aufgabe wird mit einem Verfahren und einer Strecke mit den Merkmalen der unabhängigen Ansprüche gelöst.

Das erfindungsgemäße Verfahren zum Reinigen eines Filters an einer Strecke zum Verstrecken eines oder mehrerer Faserbänder weist eine Steuereinrichtung zum Steuern von Arbeitsprozessen der Strecke und ein Absaugsystem zum Absaugen von bei Arbeitsprozessen freigesetzten Staub- und/oder Schmutzpartikeln auf. Das Absaugsystem hat einen Absaugventilator zum Erzeugen eines Saugstroms und einen Filter zum Ausfiltern von Staubund/oder Schmutzpartikeln aus dem Saugstrom. Eine in Bezug auf den Saugstrom stromaufwärtige Schmutzanlagerungsfläche des Filters wird mit wenigstens einer mit einer Druckluft beaufschlagbaren Blasdüse gereinigt, indem damit ein längs der Schmutzanlagerungsfläche des Filters strömender Reinigungsstrom erzeugt wird. Der Reinigungsstrom wird von der Steuereinrichtung in Abstimmung mit einem oder mehreren Motoren der Strecke gesteuert. Hierdurch wird vorteilhafterweise erreicht, dass der Filter besonders effektiv gereinigt werden kann.

Wird der Reinigungsstrom von der Steuereinrichtung in Abstimmung mit einem Hauptmotor der Strecke, einem Motor des Absaugventilators und/oder einem Antrieb eines Kannenwechslers gesteuert, so kann die Reinigung des Filters insbesondere bei Maschinenzuständen vorgenommen werden, welche für die Reinigung des Filters vorteilhaft sind.

Wird die Blasdüse während eines Kannenwechsels mit Druckluft beaufschlagt, so erfolgt die Reinigung während eine Phase, in der kein Faserband produziert wird. Die Reinigung kann daher ohne Auswirkung auf den Produktionsprozess erfolgen.

Vorteilhafterweise wird der Motor des Absaugventilators zusammen mit dem Hauptmotor ein- und ausgeschaltet. Dadurch ergibt sich eine günstige Reinigungszeit immer dann, wenn kein Faserband produziert wird, da der Hauptmotor und der Absaugventilator stillgesetzt sind.

Wird der Filter unmittelbar vor Einschalten des Motors des Absaugventilators abgeblasen, so wird eine erneute Verschmutzung des Filters vor Wiederaufnahme der Produktion wirkungsvoll vermieden.

Die Aufgabe wird bei einer eingangs beschriebenen Strecke dadurch gelöst, dass einer in Bezug auf den Saugstrom stromaufwärtigen Schmutzanlagerungsfläche des Filters wenigstens eine mit einer Druckluft beaufschlagbare Blasdüse zur Erzeugung eines längs der stromaufwärtigen Schmutzanlagerungsfläche des Filters strömenden Reinigungsstroms zugeordnet ist.

Eine Strecke der hier betroffenen Art dient dem Verstrecken, Doublieren und/oder Vergleichmäßigen von Faserbändern, welche Stapelfasern, insbesondere Kurzstapelfasern, aus Kunstfasern, wie Polyester, oder aus natürlichen Fasern, wie Baumwolle, enthalten. Unter einer Steuereinrichtung wird dabei eine insbesondere elektronische Einrichtung zur Beeinflussung, insbesondere zur steuernden und/oder regelnden Beeinflussung, von Aktoren, wie Motoren, Ventilen usw., verstanden.

Weiterhin wird unter einem Absaugsystem eine Vorrichtung verstanden, welche dem Absaugen von bei Arbeitsprozessen der Strecke freigesetzten Staub- und/oder Schmutzpartikeln dienen. Ein derartiges Absaugsystem dient insbesondere dazu, eine unkontrollierte Anlagerung von Staubund/oder Schmutzpartikeln an Arbeitsorganen der Strecke selbst und/oder einer unkontrollierten Verbreitung derselben am Betriebsort der Strecke zu vermeiden. Um nun den Saugstrom von den abgesaugten Staub- und/oder Schmutzpartikeln zu reinigen, bevor der Saugstrom in die Umgebung abgegeben wird, ist ein Filter zum Ausfiltern von Staub- und/oder Schmutzpartikeln aus dem Saugstromvorgesehen. Mit zunehmender Betriebsdauer lagern sich dabei Staub- und/oder Schmutzpartikeln an einer Schmutzanlagerungsfläche des Filters an, welche von Zeit zu Zeit entfernt werden müssen.

Eine Schmutzanlagerungsfläche ist dabei eine stromaufwärtige Fläche am Filter, in welche der mit Staub- und/oder Schmutzpartikeln angereicherte Saugstrom in den Filter eindringt, so dass sich die Staub- und/oder Schmutzpartikeln an eben dieser Schmutzablagerungsfläche ablagern, so dass der Saugstrom gereinigt wird.

Da nun der in Bezug auf den Saugstrom stromaufwärtigen Schmutzanlagerungsfläche des Filters wenigstens eine mit einer Druckluft beaufschlagbaren Blasdüse zur Erzeugung eines längs der stromaufwärtigen Schmutzanlagerungsfläche des Filters strömenden Reinigungsstroms zugeordnet ist, kann eine sich an der stromaufwärtigen Seite des Filters in Form einer Schmutzmatte bildende Anlagerung von Staub- und/oder Schmutzpartikeln einfach entfernt werden, indem die Blasdüse mit Druckluft beaufschlagt wird und so ein Reinigungsstrom längs der stromaufwärtigen Schmutzanlagerungsfläche erzeugt wird, der die Schmutzmatte von der Schmutzanlagerungsfläche ablöst. Unter einer Blasdüse wird dabei eine Düse verstanden, aus der Druckluft aus einem Druckluftsystem austreten kann.

Im Vergleich zur vorbekannten Lösung, bei der sich bildende Schmutzmatten mit einem mechanischen Wischer entfernt werden, ergibt sich ein wesentlich einfacherer Aufbau der Strecke. Zudem ist die erfinderische Strecke deutlich wartungsärmer, da keine beweglichen Teile zur Entfernung der Schmutzmatte erforderlich sind.

Gemäß einer zweckmäßigen Weiterbildung der Erfindung ist der Filter in Bezug auf den Saugstrom stromaufwärts des Absaugventilators angeordnet (wobei der Absaugventilator im Rahmen der Erfindung grundsätzlich als Radiallüfter ausgebildet sein kann). Auf diese Weise wird der Saugstrom gereinigt, bevor er auf den Absaugventilator trifft, so dass der Absaugventilator nicht verschmutzt, so dass er nicht gereinigt werden muss, was die Wartung der Strecke weiter vereinfacht.

Die Schmutzanlagerungsfläche ist im Wesentlichen eben ausgebildet. Dieses Merkmal begünstigt das Ablösen der Schmutzmatte durch den Reinigungsstrom so dass bei gleicher geforderter Reinigungswirkung ein Reinigungsstrom mit einer geringeren Intensität verwendet werden kann, was den Verbrauch an Druckluft senkt.

Nach einer vorteilhaften Weiterbildung der Erfindung ist der Absaugventilator als Axiallüfter ausgebildet, wobei die Schmutzanlagerungsfläche des Filters in einer Verlängerung einer Rotationsachse des Axiallüfters und quer zu der Rotationsachse angeordnet ist. Unter einem Axiallüfter wird ein Ventilator verstanden, der einen Saugstrom erzeugt, der im Wesentlichen parallel zu einer Rotationsachse des Ventilators verläuft. Wenn nun die Schmutzanlagerungsfläche in einer gedachten Verlängerung dieser Rotationsachse und quer zu der Rotationsachse angeordnet ist, dann kann der Saugstrom zwischen der Schmutzanlagerungsfläche und dem Absaugventilator im Wesentlichen gradlinig, also ohne Umlenkung, geführt werden, was einer kräftigen Saugwirkung entgegenkommt.

Gemäß der Erfindung ist die Schmutzanlagerungsfläche aufrecht ausgerichtet. Anders als bei einer nach oben weisenden Schmutzanlagerungsfläche trägt so die Gewichtskraft der Schmutzmatte zu deren Ablösen von der Schmutzanlagerungsfläche bei, so dass bei gleicher geforderter Reinigungswirkung ein Reinigungsstrom mit einer geringeren Intensität verwendet werden kann, was den Verbrauch an Druckluft weiter senkt.

Nach der Erfindung ist die Blasdüse so an einem oberen Endbereich der aufrecht ausgerichteten Schmutzanlagerungsfläche angeordnet, dass der Reinigungsstrom von dem oberen Endbereich zu einem unteren Endbereich der Schmutzanlagerungsfläche strömt. Auf diese Weise wirken sowohl die Gewichtskraft der Schmutzmatte als auch die durch den Reinigungsstrom auf die Schmutzmatte in derselben Richtung, nämlich von oben nach unten. Hierdurch kann eine sich bildende Schmutzmatte mit einem besonders geringen Einsatz von Druckluft abgelöst werden.

Gemäß einer zweckmäßigen Weiterbildung der Erfindung ist an einem unteren Endbereich der Schmutzanlagerungsfläche eine Auffangeinrichtung für Staub- und/oder Schmutzpartikel angeordnet. Auf diese Weise kann die abgelöste Schmutzmatte aufgefangen und bis zu ihrer Entfernung gelagert werden.

Nach einer vorteilhaften Weiterbildung der Erfindung ist eine vorzugsweise durch die Steuereinrichtung steuerbare Schalteinrichtung zum Ein- und Ausschalten der Beaufschlagung der Blasdüse mit der Druckluft vorgesehen. Auf diese Weise kann eine automatische Reinigung der Schmutzanlagerungsfläche realisiert werden, welche keinen manuellen Eingriff des Bedienpersonals erfordert.

Gemäß einer zweckmäßigen Weiterbildung der Erfindung ist eine vorzugsweise durch die Steuereinrichtung steuerbare Druckbeeinflussungseinrichtung zur Beeinflussung eines Druckes der Druckluft, mit welcher die Blasdüse beaufschlagbar ist, vorgesehen. Hierdurch kann ein konstantes Reinigungsergebnis unabhängig von dem Druck der verwendeten Druckluftquelle gewährleistet werden.

Nach einer vorteilhaften Weiterbildung der Erfindung ist die Druckbeeinflussungseinrichtung so ausgebildet, dass der Druck wenigstens auf einen Wert von 2 bar, bevorzugt auf einen Wert von wenigstens 4 bar, besonders bevorzugt auf einen Wert von wenigstens 6 bar, einstellbar ist. Die angegebenen Mindestwerte für den Druck der der Blasdüse zugeführten Druckluft gewährleisten in aller Regel eine hinreichende Reinigung der Schmutzanlagerungsfläche.

Gemäß einer zweckmäßigen Weiterbildung der Erfindung ist die Steuereinrichtung zum Beeinflussen einer Drehzahl des Absaugventilators ausgebildet, wobei die Steuereinrichtung den Absaugventilator abschaltet oder die Drehzahl des Absaugventilators reduziert, während die Blasdüse mit der Druckluft beaufschlagt ist. Auf diese Weise wird bewirkt, dass der Saugstrom abgeschaltet oder verringert wird, so dass die Schmutzmatte nicht oder weniger zur Schmutzanlagerungsfläche gesaugt wird, während die Schmutzanlagerungsfläche mit Hilfe des Reinigungsstroms gereinigt wird. Hierdurch wird vermieden, dass der Saugstrom den Reinigungsstrom in seiner Wirkung zu sehr schwächt, so dass ein sicheres Ablösen der Schmutzmatte gewährleistet ist.

Nach einer vorteilhaften Weiterbildung der Erfindung weist die Strecke einen vorzugsweise durch die Steuereinrichtung beeinflussbaren automatischen Kannenwechsler zum Wechseln von Kannen zum Aufnehmen von verstreckten Faserbändern auf, wobei die Steuereinrichtung zur Beaufschlagung der Blasdüse mit Druckluft während eines Kannenwechsels ausgebildet ist. Üblicherweise werden die mittels einer Strecke verstreckten Faserbänder in sogenannte Kannen abgelegt, welche als Aufbewahrungs- und/oder Transportbehälter für Faserbänder dienen können. Hierbei ist es bekannt, Strecken mit automatischen Kannenwechslern zum Wechseln von Kannen auszurüsten. Diese sind in der Regel so ausgebildet, dass, wenn eine in einer Füllposition befindliche erste Kanne vollständig befüllt ist, die Produktion der Strecke verlangsamt oder gestoppt wird, das Faserband durchtrennt wird, und die erste Kanne durch eine zweite, zunächst in einer Bereitschaftsposition befindliche Kanne ersetzt wird, woraufhin die Produktion der Strecke wieder mit normaler Geschwindigkeit durchgeführt wird.

Hierbei wird vorgeschlagen, die Beaufschlagung der Schmutzanlagerungsfläche mit dem Reinigungsstrom regelmäßig während eines Kannenwechsels durchzuführen. Dabei kann die Blasdüse während eines jeden Kannenwechsels oder jeweils nach einer vorgebbaren Anzahl von Kannenwechseln zum Einsatz gebracht werden. Hierdurch kann auf eine Überwachung des Druckabfalls am Filter verzichtet werden. Zudem wirkt es sich während des Kannenwechsels nicht störend aus, wenn der Saugstrom verringert oder abgeschaltet wird, da während eines Kannenwechsels kaum neue Staubund/oder Schmutzpartikel entstehen. Durch die regelmäßige Reinigung der Schmutzanlagerungsfläche werden ein konstanter Unterdruck im Absaugsystem, eine Schonung des Filters und eine Energieeinsparung erreicht.

Gemäß einer zweckmäßigen Weiterbildung der Erfindung ist einer Einzugseinrichtung der Strecke, einer Oberseite eines Streckwerks der Strecke, einer Unterseite des Streckwerks der Strecke und/oder einem Abzugswalzenpaar der Strecke jeweils ein Besaugungsmittel zugeordnet.

Unter einer Einzugseinrichtung wird dabei eine Einrichtung verstanden, welche ein oder mehrere Faserbänder, welche von einer Vorlagekanne oder einer vorgelagerten Textilmaschine, wie beispielsweise einer Karde, bereitgestellt werden, in die Strecke einzieht. Eine Einzugseinrichtung umfasst üblicherweise eine Verdichtungseinrichtung, beispielsweise einen Einlaufrichter, zum Verdichten des oder der Faserbänder sowie eine angetriebene Einzugswalzenanordnung, welche das oder die Faserbänder klemmt und transportiert.

Ein Streckwerk ist dabei eine Anordnung von mehreren angetriebenen Walzenanordnungen, welche jeweils das oder die Faserbänder klemmen, wobei in Laufrichtung des oder der Faserbänder die Umfangsgeschwindigkeiten zunehmen, so dass das oder die Faserbänder verstreckt werden.

Weiterhin wird unter einer Abzugseinrichtung eine Einrichtung verstanden, welche das verstreckte Faserband stromabwärts des Streckwerks verdichtet und weitertransportiert. Eine derartige Abzugseinrichtung umfasst üblicherweise eine Verdichtungseinrichtung beispielsweise einen Auslaufrichter, zum Verdichten des oder der Faserbänder sowie eine angetriebene Abzugswalzenanordnung, welche das oder die Faserbänder klemmt und weitertransportiert.

Dabei wird unter einem Besaugungsmittel ein solches Mittel verstanden, welches einen Eingang in das Absaugsystem darstellt und wenigstens einen Teil des Saugstroms führt.

Dabei hat es sich gezeigt, dass gerade im Bereich des Einzugseinrichtung, des Streckwerks und der Abzugseinrichtung durch die jeweils starke mechanische Beanspruchung des oder der Faserbänder Staub- und/oder Schmutzpartikel frei werden. Diese können dann mit den vorgeschlagenen Besaugungsmitteln abgesaugt werden.

Die vorstehend erläuterten und/oder in den Unteransprüchen wiedergegebenen vorteilhaften Aus- und Weiterbildungen der Erfindung können dabei - außer z. B. in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand einer Zeichnung näher erläutert. Es zeigt die
- **Figur**: ein Ausführungsbeispiel einer erfindungsgemäßen Strecke in einer schematischen Seitenansicht.

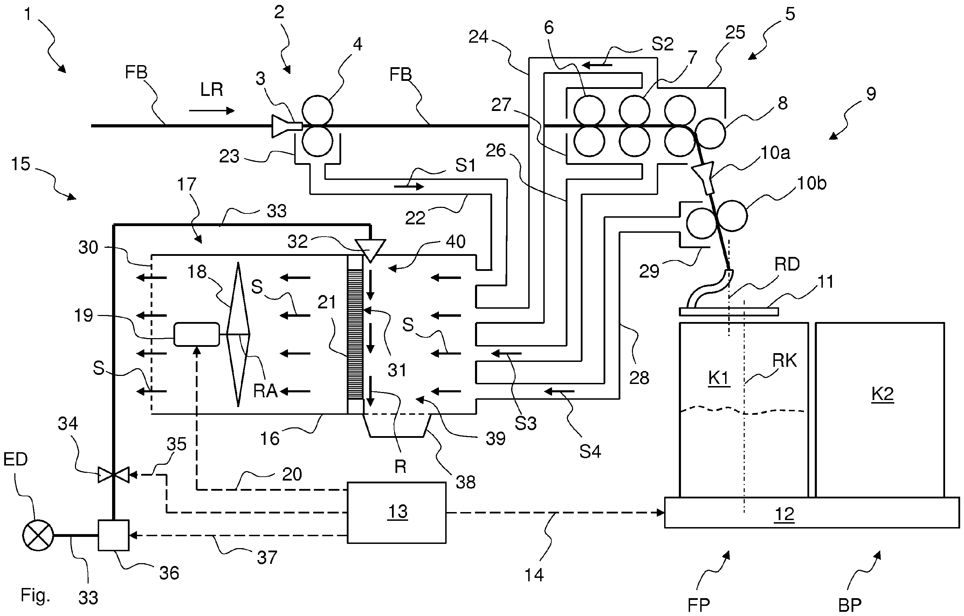

Die Figur zeigt eine Strecke 1, welche eine Einzugseinrichtung 2, welche ein oder mehrere Faserbänder FB, welche von einer Vorlagekanne oder einer vorgelagerten Textilmaschine, wie beispielsweise einer Karde, bereitgestellt werden, in die Strecke 1 in einer Laufrichtung LR einzieht. Die Einzugseinrichtung 2 umfasst eine Verdichtungseinrichtung 3, beispielsweise einen Einlaufrichte3 r, zum Verdichten des oder der Faserbänder FB sowie eine angetriebene Einzugswalzenanordnung 4, insbesondere ein Einzugswalzenpaar 4, welche das oder die Faserbänder FB klemmt und transportiert.

Stromabwärts der Einzugseinrichtung 2 ist ein Streckwerk 5 vorgesehen, welches eine Anordnung von mehreren angetriebenen Walzenanordnungen 6, 7, 8umfasst, welche jeweils das oder die Faserbänder FB klemmen, wobei in Laufrichtung LR des oder der Faserbänder FB die Umfangsgeschwindigkeiten zunehmen, so dass das oder die Faserbänder FB verstreckt werden. Im Ausführungsbeispiel umfasst das Streckwerk 5 ein Eingangswalzenpaar 6, ein Mittelwalzenpaar 7 und ein Ausgangswalzentrio 8. Stromabwärts des Streckwerks 5 ist eine Abzugseinrichtung 9 angeordnet, welche das verstreckte Faserband FB stromabwärts des Streckwerks 5 verdichtet und weitertransportiert. Eine derartige Abzugseinrichtung 9 umfasst im Ausführungsbeispiel eine Verdichtungseinrichtung 10a, beispielsweise einen Auslaufrichter 10a, zum Verdichten des oder der Faserbänder FB sowie eine angetriebene Abzugswalzenanordnung 10b, welche das oder die Faserbänder FB klemmt und weitertransportiert.

Von der Abzugseinrichtung wird das Faserband FB einem angetriebenen Drehteller 11 zugeführt, welcher um eine aufrechte Drehachse DR rotiert. Der Drehteller 11 weist für das Faserband einen zentrischen Einlass und einen exzentrischen Auslass auf. Vom Drehteller 1 gelangt das Faserband FB in eine etwa halbgefüllte Kanne K1, welche auf einem automatischen Kannenwechsler 12 in einer Füllposition FP abgestellt ist. Der Kannenwechsler 12 ist dabei so ausgebildet, dass die in der Füllposition befindliche Kanne K1 um eine aufrechte Drehachse RK rotiert. Da die Drehachse DR des Drehtellers 12 und die Drehachse RK der Kanne K1 versetzt sind, wird das Faserband FB zykloidenförmig in die Kanne K1 abgelegt. Der Kannenwechsler 12 weist weiterhin eine Bereitschaftsposition BP auf, auf der eine leere Kanne K2 abgestellt ist. Der Kannenwechsler 12 so ausgebildet, dass, wenn die in der Füllposition FP befindliche erste Kanne K1 vollständig befüllt ist, die Produktion der Strecke 1 verlangsamt oder gestoppt wird, das Faserband FB durchtrennt wird, und die erste Kanne K1 durch die zweite, zunächst in einer Bereitschaftsposition P befindliche Kanne K2 ersetzt wird, woraufhin die Produktion der Strecke 1 wieder mit normaler Geschwindigkeit durchgeführt wird.

Weiterhin weist die Strecke 1 eine Steuereinrichtung 13 auf. Unter einer Steuereinrichtung 13 wird dabei eine insbesondere elektronische Einrichtung zur Beeinflussung, insbesondere zur steuernden und/oder regelnden Beeinflussung, von Aktoren, wie Motoren, Ventilen usw., verstanden. Im Ausführungsbeispiel steuert die Steuereinrichtung 13 beispielsweise die Antriebe der Einzugswalzenanordnung 4, des Streckwerks 5, des Abzugswalzenpaars 10, des Drehtellers 11 und über eine Steuerleitung 14 den Kannenwechsler 12.

Darüber hinaus weist die Strecke 1 ein Absaugsystem 15 auf, welches dem Absaugen von bei Arbeitsprozessen der Strecke 1 freigesetzten Staubund/oder Schmutzpartikeln dienen. Ein derartiges Absaugsystem 15 dient insbesondere dazu, eine unkontrollierte Anlagerung von Staub- und/oder Schmutzpartikeln an Arbeitsorganen der Strecke 1 selbst und/oder einer unkontrollierten Verbreitung derselben am Betriebsort der Strecke 1 zu vermeiden. Das Absaugsystem 15 umfasst einen Filterkasten 16, in dem ein Absaugventilator 17 (z. B. in Form eines Radiallüfters) angeordnet ist, welcher einen Rotor 18 und einen Motor 19 aufweist. Der Motor 19 ist dabei über eine Steuerleitung 20 durch die Steuereinrichtung 13 steuerbar. Wird der Motor 19 eingeschaltet, so rotiert der Rotor 18 und bewirkt einen Saugstrom S.

Um nun den Saugstrom S von den abgesaugten Staub- und/oder Schmutzpartikeln zu reinigen, bevor der Saugstrom S in die Umgebung abgegeben wird, ist im Filterkasten 16 ein Filter 21 zum Ausfiltern von Staub- und/oder Schmutzpartikeln aus dem Saugstrom S vorgesehen. Auf der stromaufwärtigen Seite des Filters 21 ist an den Filterkasten 16 eine Saugstromleitung 22 angeschlossen, welche mit einem Besaugungsmittel 23 verbunden ist, welches der Einzugseinrichtung 2 zugeordnet ist. Auf diese Weise werden an der Einzugseinrichtung 2 entstehende Staub- und/oder Schmutzpartikeln mittels eines Teilsaugstroms S1 zum Filter 21 gesaugt. Weiterhin ist an der stromaufwärtigen Seite des Filters 21 eine Saugstromleitung 24 an den Filterkasten 16 angeschlossen, welche mit einem Besaugungsmittel 25 verbunden ist, welches einer Oberseite des Streckwerks 5 zugeordnet ist. Auf diese Weise werden an der Oberseite des Streckwerks 5 entstehende Staubund/oder Schmutzpartikeln mittels eines Teilsaugstroms S2 zum Filter 21 gesaugt. In gleicher Weise ist an der stromaufwärtigen Seite des Filters 21 eine Saugstromleitung 26 an den Filterkasten 16 angeschlossen, welche mit einem Besaugungsmittel 27 verbunden ist, welches einer Unterseite des Streckwerks 5 zugeordnet ist. Auf diese Weise werden an der Unterseite des Streckwerks 5 entstehende Staub- und/oder Schmutzpartikeln mittels eines Teilsaugstroms S2 zum Filter 21 gesaugt. Ebenso ist an der stromaufwärtigen Seite des Filters 21 eine Saugstromleitung 28 an den Filterkasten 16 angeschlossen, welche mit einem Besaugungsmittel 29 verbunden ist, welches der Abzugseinrichtung 9 zugeordnet ist. Auf diese Weise werden an der Abzugseinrichtung 9 entstehende Staub- und/oder Schmutzpartikeln mittels eines Teilsaugstroms S2 zum Filter 21 gesaugt. Dabei hat es sich gezeigt, dass gerade im Bereich des Einzugseinrichtung 2, des Streckwerks 5 und der Abzugseinrichtung 9 durch die jeweils starke mechanische Beanspruchung des oder der Faserbänder FB Staub- und/oder Schmutzpartikel frei werden. Diese können dann mit den vorgeschlagenen Besaugungsmitteln 23, 25, 27, 29 abgesaugt werden.

Der gereinigte Saugstrom S wird im Ausführungsbeispiel über ein Schutzgitter 30 an die Umgebungsluft abgegeben, er könnte aber auch an ein externes Leitungssystem abgegeben werden.

Der Filter 21 weist an seiner stromaufwärtigen Seite eine Schmutzanlagerungsfläche 31 auf, in welche der mit Staub- und/oder Schmutzpartikeln angereicherte Saugstrom S in den Filter 21 eindringt, so dass sich die Staubund/oder Schmutzpartikeln an eben dieser Schmutzablagerungsfläche 31 ablagern, so dass der Saugstrom S gereinigt wird.

Mit zunehmender Betriebsdauer lagern sich dabei Staub- und/oder Schmutzpartikeln an einer Schmutzanlagerungsfläche des Filters an, welche von Zeit zu Zeit entfernt werden müssen. Erfindungsgemäß ist hierzu eine mit einer Druckluft beaufschlagbare Blasdüse 32 zur Erzeugung eines an der stromaufwärtigen Seite des Filters 21 längs der Schmutzanlagerungsfläche 31 des Filters 21 strömenden Reinigungsstroms R zugeordnet. Dabei kann eine sich an der stromaufwärtigen Seite des Filters 21 in Form einer Schmutzmatte bildende Anlagerung von Staub- und/oder Schmutzpartikeln einfach entfernt werden, indem die Blasdüse 32 mit Druckluft beaufschlagt wird und so der Reinigungsstrom R längs der stromaufwärtigen Schmutzanlagerungsfläche 31 erzeugt wird, der die Schmutzmatte von der Schmutzanlagerungsfläche ablöst. Unter einer Blasdüse 32 wird dabei eine Düse verstanden, aus der Druckluft aus einem Druckluftsystem austreten kann.

Im Vergleich zur vorbekannten Lösung, bei der sich bildende Schmutzmatten mit einem mechanischen Wischer entfernt werden, ergibt sich ein wesentlich einfacherer Aufbau der Strecke 1. Zudem ist die erfinderische Strecke 1 deutlich wartungsärmer, da keine beweglichen Teile zur Entfernung der Schmutzmatte erforderlich sind.

Zweckmäßigerweise ist der Filter 21 in Bezug auf den Saugstrom S stromaufwärts des Absaugventilators 17 angeordnet. Auf diese Weise wird der Saugstrom S gereinigt, bevor er auf den Absaugventilator 17 trifft, so dass der Absaugventilator 17 nicht verschmutzt, so dass er nicht gereinigt werden muss, was die Wartung der Strecke 1 weiter vereinfacht.

Vorteilhafterweise ist die Schmutzanlagerungsfläche 31 im Wesentlichen eben ausgebildet. Dieses Merkmal begünstigt das Ablösen der Schmutzmatte durch den Reinigungsstrom R so dass bei gleicher geforderter Reinigungswirkung ein Reinigungsstrom R mit einer geringeren Intensität verwendet werden kann, was den Verbrauch an Druckluft senkt.

Zweckmäßigerweise ist der Absaugventilator 17 als Axiallüfter 17 ausgebildet, wobei die Schmutzanlagerungsfläche 31 des Filters 21 in einer Verlängerung einer Rotationsachse RA des Axiallüfters 17 und quer zu der Rotationsachse RA angeordnet ist. Unter einem Axiallüfter 17 wird ein Ventilator 17 verstanden, der einen Saugstrom S erzeugt, der im Wesentlichen parallel zu einer Rotationsachse RA des Ventilators 17 verläuft. Wenn nun die Schmutzanlagerungsfläche31 in einer gedachten Verlängerung dieser Rotationsachse RA und quer zu der Rotationsachse RA angeordnet ist, dann kann der Saugstrom S zwischen der Schmutzanlagerungsfläche 31 und dem Absaugventilator 17 im Wesentlichen gradlinig, also ohne Umlenkung, geführt werden, was einer kräftigen Saugwirkung entgegenkommt.

Die Blasdüse 32 ist im Ausführungsbeispiel über eine Druckluftleitung 33 mit einer externen Druckluftquelle ED verbunden.

Zweckmäßigerweise eine Schalteinrichtung 34 zum Ein- und Ausschalten der Beaufschlagung der Blasdüse 32 mit der Druckluft vorgesehen. Die Schalteinrichtung 34 kann vorzugsweise über eine Steuerleitung 35 durch die Steuereinrichtung 13 steuerbar sein. Dabei kann die Schalteinrichtung 34 beispielsweise in der Druckluftleitung 33 angeordnet sein. Auf diese Weise kann eine automatische Reinigung der Schmutzanlagerungsfläche 31 realisiert werden, welche keinen manuellen Eingriff des Bedienpersonals erfordert.

Vorteilhafterweise ist eine Druckbeeinflussungseinrichtung 36 zur Beeinflussung eines Druckes der Druckluft, mit welcher die Blasdüse 32 beaufschlagbar ist, vorgesehen. Diese ist vorzugsweise durch die Steuereinrichtung 13 steuerbar. Hierzu kann die Steuereinrichtung 13 über eine Steuerleitung 37 mit der Druckbeeinflussungseinrichtung 36 verbunden sein. Dabei kann die Druckbeeinflussungseinrichtung 36 in der Druckluftleitung 33 angeordnet sein. Hierdurch kann ein konstantes Reinigungsergebnis unabhängig von dem Druck der verwendeten Druckluftquelle gewährleistet werden.

Zweckmäßigerweise ist die Druckbeeinflussungseinrichtung 36 so ausgebildet, dass der Druck wenigstens auf einen Wert von 2 bar, bevorzugt auf einen Wert von wenigstens 4 bar, besonders bevorzugt auf einen Wert von wenigstens 6 bar, einstellbar ist. Die angegebenen Mindestwerte für den Druck der der Blasdüse 32 zugeführten Druckluft gewährleisten in aller Regel eine hinreichende Reinigung der Schmutzanlagerungsfläche.

Zweckmäßigerweise ist eine Auffangeinrichtung 38 für Staub- und/oder Schmutzpartikel an einem unteren Endbereich 39 der Schmutzanlagerungsfläche 31 angeordnet. Auf diese Weise kann die abgelöste Schmutzmatte aufgefangen und bis zu ihrer Entfernung gelagert werden.

Vorteilhafterweise ist die Schmutzanlagerungsfläche 31 aufrecht ausgerichtet. Anders als bei einer nach oben weisenden Schmutzanlagerungsfläche trägt so die Gewichtskraft der Schmutzmatte zu deren Ablösen von der Schmutzanlagerungsfläche 31 bei, so dass bei gleicher geforderter Reinigungswirkung ein Reinigungsstrom R mit einer geringeren Intensität verwendet werden kann, was den Verbrauch an Druckluft weiter senkt.

Zweckmäßigerweise ist die Blasdüse 32 so an einem oberen Endbereich 40 der aufrecht ausgerichteten Schmutzanlagerungsfläche 31 angeordnet, dass der Reinigungsstrom R von dem oberen Endbereich 40 zu einem unteren Endbereich 39 der Schmutzanlagerungsfläche 31 strömt. Auf diese Weise wirken sowohl die Gewichtskraft der Schmutzmatte als auch die durch den Reinigungsstrom R auf die Schmutzmatte in derselben Richtung, nämlich von oben nach unten. Hierdurch kann eine sich bildende Schmutzmatte mit einem besonders geringen Einsatz von Druckluft abgelöst werden.

Vorteilhafterweise ist die Steuereinrichtung 13 zum Beeinflussen einer Drehzahl des Absaugventilators 17 ausgebildet, wobei die Steuereinrichtung 13 den Absaugventilator 17 abschaltet oder die Drehzahl des Absaugventilators 17 reduziert, während die Blasdüse 32 mit der Druckluft beaufschlagt ist. Auf diese Weise wird bewirkt, dass der Saugstrom S abgeschaltet oder verringert wird, so dass die Schmutzmatte nicht oder weniger zur Schmutzanlagerungsfläche 31 gesaugt wird, während die Schmutzanlagerungsfläche 31 mit Hilfe des Reinigungsstroms R gereinigt wird. Hierdurch wird vermieden, dass der Saugstrom S den Reinigungsstrom R in seiner Wirkung zu sehr schwächt, so dass ein sicheres Ablösen der Schmutzmatte gewährleistet ist.

Wie bereits erwähnt, weist die Strecke 1 einen vorzugsweise durch die Steuereinrichtung 13 beeinflussbaren automatischen Kannenwechsler 12 zum Wechseln von Kannen K1, K2 zum Aufnehmen von verstreckten Faserbändern FB auf. Vorteilhafterweise ist die Steuereinrichtung 13 zur Beaufschlagung der Blasdüse 32 mit Druckluft während eines Kannenwechsels ausgebildet ist.

Hierbei kann die Schmutzanlagerungsfläche 31 regelmäßig während eines Kannenwechsels gereinigt werden. Dabei kann vorgesehen sein, die Blasdüse 32 während eines jeden Kannenwechsels oder jeweils nach einer vorgebbaren Anzahl von Kannenwechseln zum Einsatz zu bringen. Hierdurch kann auf eine Überwachung des Druckabfalls am Filter 21 verzichtet werden. Zudem wirkt es sich während des Kannenwechsels nicht störend aus, wenn der Saugstrom S verringert oder abgeschaltet wird, da während eines Kannenwechsels kaum neue Staub- und/oder Schmutzpartikel entstehen. Durch die regelmäßige Reinigung der Schmutzanlagerungsfläche 31 werden ein konstanter Unterdruck im Absaugsystem 15, eine Schonung des Filters 21 und eine Energieeinsparung erreicht.

Die in Bezug auf den Saugstrom (S) stromaufwärtige Schmutzanlagerungsfläche (31) des Filters (21) wird mit wenigstens einer mit einer Druckluft beaufschlagbaren Blasdüse (32) gereinigt, indem damit ein längs der Schmutzanlagerungsfläche (31) des Filters (21) strömender Reinigungsstrom (R) erzeugt wird und der Reinigungsstrom (R) von der Steuereinrichtung (13) in Abstimmung mit einem oder mehreren Motoren der Strecke gesteuert wird. Der Reinigungsstrom (R) wird von der Steuereinrichtung (13) in Abstimmung mit einem Hauptmotor der Strecke, einem Motor des Absaugventilators (17) und/oder einem Antrieb eines Kannenwechslers gesteuert. Der Motor des Absaugventilators (17) kann vorzugsweise zusammen mit dem Hauptmotor ein- und ausgeschaltet werden. Besonders bevorzugt wird der Filter (21) unmittelbar vor Einschalten des Motors des Absaugventilators abgeblasen.

### Bezugszeichenliste

- 1: Strecke
- 2: Einzugseinrichtung
- 3: Einlauftrichter
- 4: Einzugswalzenanordnung
- 5: Streckwerk
- 6: Einlaufwalzenpaar
- 7: Mittelwalzenpaar
- 8: Lieferwalzentrio
- 9: Abzugseinrichtung
- 10a: Auslauftrichter
- 10b: Abzugswalzenpaar
- 11: Drehteller
- 12: Kannenwechsler
- 13: Steuereinrichtung
- 14: Steuerleitung
- 15: Absaugsystem
- 16: Filterkasten
- 17: Absaugventilator
- 18: Rotor
- 19: Antrieb
- 20: Steuerleitung
- 21: Filter
- 22: Saugstromleitung
- 23: Besaugungsmittel
- 24: Saugstromleitung
- 25: Besaugungsmittel
- 26: Saugstromleitung
- 27: Besaugungsmittel
- 28: Saugstromleitung
- 29: Besaugungsmittel
- 30: Schutzgitter
- 31: Schmutzanlagerungsfläche
- 32: Blasdüse
- 33: Druckluftleitung
- 34: Schalteinrichtung
- 35: Steuerleitung
- 36: Druckbeeinflussungseinrichtung
- 37: Steuerleitung
- 38: Auffangeinrichtung
- 39: unterer Endbereich
- 40: oberer Endbereich

- FB: Faserband
- LR: Laufrichtung
- RD: Rotationsachse
- K1: Kanne
- FP: Füllposition
- RK: Rotationsachse
- BP: Bereitschaftsposition
- K2: Kanne
- S: Saugstrom
- S1: Teilsaugstrom
- S2: Teilsaugstrom
- S3: Teilsaugstrom
- S4: Teilsaugstrom
- ED: externe Druckluftquelle
- R: Reinigungsstrom
- RA: Rotationsachse

## Patentansprüche

1. Verfahren zum Reinigen eines Filters (21) an einer Strecke zum Verstrecken eines oder mehrerer Faserbänder (FB) mit einer Steuereinrichtung (13) zum Steuern von Arbeitsprozessen der Strecke (1) und mit einem Absaugsystem (15) zum Absaugen von bei Arbeitsprozessen freigesetzten Staub- und/oder Schmutzpartikeln,
- wobei das Absaugsystem (15) einen Absaugventilator (17) zum Erzeugen eines Saugstroms (S) und den Filter (21) zum Ausfiltern von Staub- und/oder Schmutzpartikeln aus dem Saugstrom (S) aufweist und
- eine in Bezug auf den Saugstrom (S) stromaufwärtige Schmutzanlagerungsfläche (31) des Filters (21), vorzugsweise bei einem Produktionsstopp oder einem Kannenwechsel, gereinigt wird,
**dadurch gekennzeichnet, dass**
- die Schmutzanlagerungsfläche (31) des Filters (21) mit wenigstens einer mit einer Druckluft beaufschlagbaren Blasdüse (32) gereinigt wird,
- mittels der Blasdüse (32) ein längs der Schmutzanlagerungsfläche (31) des Filters (21) strömender Reinigungsstrom (R) erzeugt wird und
- der Reinigungsstrom (R) von der Steuereinrichtung (13) in Abstimmung mit einem Hauptmotor der Strecke und/oder einem Antrieb eines Kannenwechslers gesteuert wird, sodass bei stillgesetztem Hauptmotor der Strecke und/oder bei einem Kannenwechsel gereinigt werden kann,
- dass die Schmutzanlagerungsfläche (31) eben und aufrecht ausgebildet ist und
- dass die Blasdüse (32) so an einem oberen Endbereich (40) der aufrecht ausgerichteten Schmutzanlagerungsfläche (31) angeordnet ist, dass der Reinigungsstrom (R) von dem oberen Endbereich (40) zu einem unteren Endbereich (39) längs der Schmutzanlagerungsfläche (31) strömt.

2. Verfahren nach dem vorherigen Anspruch, **dadurch gekennzeichnet, dass** der Reinigungsstrom (R) von der Steuereinrichtung (13) in Abstimmung mit einem Motor des Absaugventilators (17) gesteuert wird.

3. Verfahren nach Anspruch 2, **dadurch gekennzeichnet, dass** der Motor des Absaugventilators (17) zusammen mit dem Hauptmotor ein- und ausgeschaltet wird.

4. Verfahren nach einem der vorherigen Ansprüche, **dadurch gekennzeichnet, dass** der Filter (21) unmittelbar vor Einschalten des Motors des Absaugventilators abgeblasen wird.

5. Strecke zum Verstrecken eines oder mehrerer Faserbänder (FB)
- mit einer Steuereinrichtung (13) zum Steuern von Arbeitsprozessen der Strecke (1) und
- mit einem Absaugsystem (3) zum Absaugen von bei Arbeitsprozessen freigesetzten Staub- und/oder Schmutzpartikeln,
- wobei das Absaugsystem (15) einen Absaugventilator (17) zum Erzeugen eines Saugstroms (S) und
- einen Filter (21) mit einer in Bezug auf den Saugstrom (S) stromaufwärtigen Schmutzanlagerungsfläche (31) zum Ausfiltern von Staub- und/oder Schmutzpartikeln aus dem Saugstrom (S) aufweist und
- wobei einer Einzugseinrichtung (2) der Strecke (1), einer Oberseite eines Streckwerks (5) der Strecke (1), einer Unterseite des Streckwerks (5) der Strecke (1) und/oder einer Abzugseinrichtung (9) der Strecke (1) jeweils ein Besaugungsmittel (23, 25, 27, 29) zugeordnet ist,
**dadurch gekennzeichnet,**
- **dass** der Schmutzanlagerungsfläche (31) des Filters (21) wenigstens eine mit einer Druckluft beaufschlagbare Blasdüse (32) zur Erzeugung eines längs der Schmutzanlagerungsfläche (31) des Filters (21) strömenden Reinigungsstroms (R) zugeordnet ist und
- **dass** die Steuereinrichtung (13) zur Steuerung des Reinigungsstromes (R) in Abstimmung mit einem Hauptmotor der Strecke und/oder einem Antrieb eines Kannenwechslers vorgesehen ist, sodass bei stillgesetztem Hauptmotor der Strecke und/oder bei einem Kannenwechsel gereinigt werden kann,
- **dass** die Schmutzanlagerungsfläche (31) eben und aufrecht ausgebildet ist und
- **dass** die Blasdüse (32) so an einem oberen Endbereich (39) der aufrecht ausgerichteten Schmutzanlagerungsfläche (31) angeordnet ist, dass der Reinigungsstrom (R) von dem oberen Endbereich (40) zu einem unteren Endbereich (39) längs der Schmutzanlagerungsfläche (31) strömt.

6. Strecke nach dem vorherigen Anspruch, **dadurch gekennzeichnet, dass** der Filter (21) in Bezug auf den Saugstrom (S) stromaufwärts des Absaugventilators (17) angeordnet ist.

7. Strecke nach einem der vorherigen Ansprüche 5 bis 6, **dadurch gekennzeichnet, dass** der Absaugventilator (17) als Axiallüfter (17) ausgebildet ist, wobei die Schmutzanlagerungsfläche (31) des Filters (21) in einer Verlängerung einer Rotationsachse (RA) des Axiallüfters (17) und quer zu der Rotationsachse (RA) angeordnet ist.

8. Strecke nach einem der vorherigen Ansprüche 5 bis 7, **dadurch gekennzeichnet, dass** an einem unteren Endbereich (39) der Schmutzanlagerungsfläche (31) eine Auffangeinrichtung (38) für Staub- und/oder Schmutzpartikel angeordnet ist.

9. Strecke nach einem der vorherigen Ansprüche 5 bis 8, **dadurch gekennzeichnet, dass** eine vorzugsweise durch die Steuereinrichtung (13) steuerbare Schalteinrichtung (34) zum Ein- und Ausschalten der Beaufschlagung der Blasdüse (32) mit der Druckluft vorgesehen ist.

10. Strecke nach einem der vorherigen Ansprüche 5 bis 9, **dadurch gekennzeichnet, dass** eine vorzugsweise durch die Steuereinrichtung (13) steuerbare Druckbeeinflussungseinrichtung (36) zur Beeinflussung eines Druckes der Druckluft, mit welcher die Blasdüse (32) beaufschlagbar ist, vorgesehen ist.

11. Strecke nach dem vorherigen Anspruch, **dadurch gekennzeichnet, dass** die Druckbeeinflussungseinrichtung (36) so ausgebildet ist, dass der Druck wenigstens auf einen Wert von 2 bar, bevorzugt auf einen Wert von wenigstens 4 bar, besonders bevorzugt auf einen Wert von wenigstens 6 bar, einstellbar ist.

12. Strecke nach einem der vorherigen Ansprüche 5 bis 11, **dadurch gekennzeichnet, dass** die Steuereinrichtung (13) zum Beeinflussen einer Drehzahl des Absaugventilators (17) ausgebildet ist, wobei die Steuereinrichtung (13) den Absaugventilator (17) abschaltet oder die Drehzahl des Absaugventilators (17) reduziert, während die Blasdüse (32) mit der Druckluft beaufschlagt ist.

## Claims

1. A method for cleaning a filter (21) on a draw frame for drafting one or more slivers (FB) having a controller (13) for controlling work processes of the draw frame (1) and having an exhaust system (15) for exhausting dust and/or dirt particles released during work processes,
- the exhaust system (15) comprising an exhaust fan (17) for generating a suction flow (S) and the filter (21) for filtering out dust and/or dirt particles from the suction flow (S) and
- a dirt collecting surface (31) of the filter (21) upstream with respect to the suction flow (S) being cleaned, preferable during a production stop or a can change, **characterized in that**
- the dirt collecting surface (31) of the filter (21) being cleaned by means of at least one blast nozzle (32) to which compressed air can be applied,
- a cleaning flow (R) flowing along the length of the dirt collecting surface (31) of the filter (21) is generated by the blast nozzle (32) and
- the cleaning flow (R) is controlled by the controller (13) in coordination with a main motor of the draw frame and/or a drive of a can changer, in such a way that the cleaning can take place during a standstill of the main motor of the draw frame and/or a can change,
- the dirt collecting surface (31) is aligned plane and vertically and
- the blast nozzle (32) is disposed on an upper end region (40) of the vertically oriented dirt collecting surface (31), such that the cleaning flow (R) flows from the upper end region (40) to a lower end region (39) along the dirt collecting surface (31).

2. The method according to the preceding claim, **characterized in that** the cleaning flow (R) is controlled by the controller (13) in coordination with a motor of the exhaust fan (17).

3. The method according to claim 2, **characterized in that** the motor of the exhaust fan (17) is switched on and off together with the main motor.

4. The method according to any one of the preceding claims, **characterized in that** the filter (21) is blown off immediately prior to switching on the motor of the exhaust fan.

5. A draw frame for drafting one or more slivers (FB)
- having a controller (13) for controlling work processes of the draw frame (1) and
- having an exhaust system (15) for exhausting dust and/or dirt particles released during work processes,
- the exhaust system (15) comprising an exhaust fan (17) for generating a suction flow (S) and
- a filter (21) having a dirt collecting surface (31) upstream with respect to the suction flow (S) for filtering out dust and/or dirt particles from the suction flow (S),and
- wherein an infeed device (2) of the draw frame (1), a top side of a drafting system (5) of the draw frame (1), a bottom side of the drafting system (5) of the draw frame (1), and/or a draw-off device (9) of the drafting system (1) are each associated with a suction means (23, 25, 27, 29) **characterized in that**
- a dirt collecting surface (31) of the filter (21) is associated with at least one blast nozzle (32) to which compressed air can be applied for generating a cleaning flow (R) flowing along the dirt collecting surface (31) of the filter (21), and
- the controller (13) is provided for controlling the cleaning flow (R) in coordination with a main motor of the draw frame and/or a drive of a can changer, in such a way that the cleaning can take place during a standstill of the main motor of the draw frame and/or a can change,
- the dirt collecting surface (31) is aligned plane and vertically and
- the blast nozzle (32) is disposed on an upper end region (40) of the vertically oriented dirt collecting surface (31), such that the cleaning flow (R) flows from the upper end region (40) to a lower end region (39) along the dirt collecting surface (31).

6. The draw frame according to the preceding claim, **characterized in that** the filter (21) is disposed upstream of the exhaust fan (17) with respect to the suction flow (S).

7. The draw frame according to any one of the preceding claims 5 to 6, **characterized in that** the exhaust fan (17) is implemented as an axial fan (17), wherein the dirt collecting surface (31) of the filter (21) is disposed in an extension of an axis of rotation (RA) of the axial fan (17) and transverse to the axis of rotation (RA).

8. The draw frame according to any one of the preceding claims 5 to 7, **characterized in that** a collecting device (38) for dust and/or dirt particles is disposed at a lower end region (39) of the dirt collecting surface (31).

9. The draw frame according to any one of the preceding claims 5 to 8, **characterized in that** a switching device (34) preferably controlled by the controller (13) for switching on and off the supply of compressed air to the blast nozzle (32) is provided.

10. The draw frame according to any one of the preceding claims 5 to 9, **characterized in that** a pressure influencing device (36) preferably controllable by the controller (13) for influencing a pressure of the compressed air supplied to the blast nozzle (32) is provided.

11. The draw frame according to the preceding claim, **characterized in that** the pressure influencing device (36) is implemented so that the pressure can be adjusted to a value of at least 2 bar, preferably to a value of at least 4 bar, particularly preferably to a value of at least 6 bar.

12. The draw frame according to any one of the preceding claims 5 to 11, **characterized in that** the controller (13) is implemented for influencing a speed of the exhaust fan (17), wherein the controller (13) switches off the exhaust fan (17) or reduces the speed of the exhaust fan (17) while compressed air is being supplied to the blast nozzle (32).

## Revendications

1. Procédé pour nettoyer un filtre (21) sur une étireuse pour l'étirage d'un ou de plusieurs rubans de fibres (FB), avec un dispositif de commande (13) pour commander des processus de travail de l'étireuse (1) et un système d'aspiration (15) pour aspirer des particules de poussières et/ou de saletés rejetées lors des processus de travail,
- sachant que le système d'aspiration (15) comporte un ventilateur d'extraction (17) pour générer un courant d'aspiration (S) et le filtre (21) pour éliminer par filtration des particules de poussières et/ou de saletés depuis le courant d'aspiration (S) et
- qu'une surface (31) d'accumulation de saletés du filtre (21) disposée en amont par rapport au courant d'aspiration (S) est nettoyée de préférence lors d'un arrêt de production ou d'un changement de pot,
**caractérisé en ce que**
- la surface (31) d'accumulation de saletés du filtre (21) est nettoyée à l'aide d'au moins une buse de soufflage (32) pouvant être soumise à de l'air comprimé,
- un courant de nettoyage (R) s'écoulant le long de la surface (31) d'accumulation de saletés du filtre (21) est généré au moyen de la buse de soufflage (32) et
- le courant de nettoyage (R) est commandé par le dispositif de commande (13) en accord avec un moteur principal de l'étireuse et/ou un entraînement d'un changeur de pots, de sorte que le nettoyage puisse être effectué à l'état arrêté du moteur principal et/ou lors d'un changement de pot,
- la surface (31) d'accumulation de saletés se présente sous une forme plane et debout, et
- **en ce que** la buse de soufflage (32) est disposée sur une zone d'extrémité supérieure (40) de la surface (31) d'accumulation de saletés orientée verticalement, de sorte que le courant de nettoyage (R) s'écoule de la zone d'extrémité supérieure (40) vers une zone d'extrémité inférieure (39) le long de la surface (31) d'accumulation de saletés.

2. Procédé selon la revendication précédente, **caractérisé en ce que** le courant de nettoyage (R) est commandé par le dispositif de commande (13) en accord avec un moteur du ventilateur d'extraction (17).

3. Procédé selon la revendication 2, **caractérisé en ce que** le moteur du ventilateur d'extraction (17) est mis en marche et arrêté en même temps que le moteur principal.

4. Procédé selon l'une des revendications précédentes, **caractérisé en ce que** le filtre (21) est purgé par soufflage peu avant la mise en marche du moteur du ventilateur d'extraction.

5. Étireuse pour l'étirage d'un ou de plusieurs rubans de fibres (FB),
- avec un dispositif de commande (13) pour commander des processus de travail de l'étireuse (1) et
- avec un système d'aspiration (15) pour aspirer des particules de poussières et/ou de saletés rejetées lors des processus de travail,
- dans laquelle le système d'aspiration (15) comporte un ventilateur d'extraction (17) pour générer un courant d'aspiration (S) et
- un filtre (21) avec une surface (31) d'accumulation de saletés disposée en amont par rapport au courant d'aspiration (S) pour éliminer par filtration des particules de poussières et/ou de saletés du courant d'aspiration (S), et
- dans laquelle un moyen d'aspiration (23, 25, 27, 29) est respectivement associé à un dispositif d'insertion (2) de l'étireuse (1), un côté supérieur d'un dispositif d'étirage (5) de l'étireuse (1), un côté inférieur du dispositif d'étirage (5) de l'étireuse (1) et/ou un dispositif d'extraction (9) de l'étireuse (1),
**caractérisée en ce qu'**
- une buse de soufflage (32) au moins pouvant être soumise à de l'air comprimé est associée à la surface (31) d'accumulation de saletés du filtre (21) pour générer un courant de nettoyage (R) s'écoulant le long de la surface (31) d'accumulation de saletés du filtre (21), et
- **en ce que** le dispositif de commande (13) est prévu pour la commande du courant de nettoyage (R) en accord avec un moteur principal de l'étireuse et/ou un entraînement d'un changeur de pots, de sorte que le nettoyage puisse être effectué à l'état arrêté du moteur principal et/ou lors d'un changement de pot,
- que la surface (31) d'accumulation de saletés se présente sous une forme plane et debout, et
- **en ce que** la buse de soufflage (32) est disposée sur une zone d'extrémité supérieure (39) de la surface (31) d'accumulation de saletés orientée verticalement, de sorte que le courant de nettoyage (R) s'écoule de la zone d'extrémité supérieure (40) vers une zone d'extrémité inférieure (39) le long de la surface (31) d'accumulation de saletés.

6. Étireuse selon la revendication précédente, **caractérisée en ce que** le filtre (21) est disposé en amont du ventilateur d'extraction (17) par rapport au courant d'aspiration (S).

7. Étireuse selon l'une des revendications 5 à 6 précédentes, **caractérisée en ce que** le ventilateur d'extraction (17) se présente sous la forme d'un ventilateur axial (17), la surface (31) d'accumulation de saletés du filtre (21) étant disposée dans un prolongement d'un axe de rotation (RA) du ventilateur axial (17) et perpendiculairement à l'axe de rotation (RA).

8. Étireuse selon l'une des revendications 5 à 7 précédentes, **caractérisée en ce qu'**un dispositif de collecte (38) pour les particules de poussières et/ou de saletés est disposé dans une zone d'extrémité inférieure (39) de la surface (31) d'accumulation de saletés.

9. Étireuse selon l'une des revendications 5 à 8 précédentes, **caractérisée en ce qu'**il est prévu un dispositif de commutation (34) pouvant de préférence être commandé par le dispositif de commande (13), pour mettre en marche et arrêter l'application de l'air comprimé sur la buse de soufflage (32).

10. Étireuse selon l'une des revendications 5 à 9 précédentes, **caractérisée en ce qu'**il est prévu un dispositif (36) d'influence de pression pouvant de préférence être commandé par le dispositif de commande (13), pour influencer une pression de l'air comprimé qui peut être appliquée sur la buse de soufflage (32).

11. Étireuse selon la revendication précédente, **caractérisée en ce que** le dispositif (36) d'influence de pression se présente sous une forme telle que la pression puisse être réglée au moins à une valeur de 2 bar, de préférence à une valeur d'au moins 4 bar, de manière particulièrement préférée, à une valeur d'au moins 6 bar.

12. Étireuse selon l'une des revendications 5 à 11 précédentes, **caractérisée en ce que** le dispositif de commande (13) se présente sous une forme pour influencer une vitesse de rotation du ventilateur d'extraction (17), sachant que le dispositif de commande (13) arrête le ventilateur d'extraction (17) ou réduit la vitesse de rotation du ventilateur d'extraction (17) pendant que de l'air comprimé est appliqué sur la buse de soufflage (32).
